# EUROPEAN PATENT APPLICATION

(11) **EP 3 585 106 A1**
(43) Date of publication of application: **25.12.2019**
(21) Application number: 17900446.0
(22) Date of filing: 22.06.2017
(51) Int. Cl.: H04W 48/16

(54) **METHOD AND APPARATUS FOR PROCESSING SERVICE SET IDENTIFIER, AND TERMINAL**

(30) Priority: 13.03.2017 CN 201710147083
(71) Applicant: Huawei Technologies Co., Ltd., Longgang District Shenzhen, Guangdong 518129 (CN)
(72) Inventor: DING, Ji, Shenzhen Guangdong 518129 (CN); LU, Junxin, Shenzhen Guangdong 518129 (CN)
(74) Representative: Pfenning, Meinig & Partner mbB
(86) International application number: PCT/CN2017/089533
(87) International publication number: WO 2018/166093

(57) **Abstract**

A service set identifier processing method and apparatus, and a terminal are provided, so as to resolve a problem that there are garbled characters when a terminal displays an SSID. The method includes: obtaining, by a terminal, an SSID in a first encoding format, where the SSID in the first encoding format is broadcast by a wireless AP; and converting, by the terminal, the SSID in the first encoding format to an SSID in a second encoding format, and displaying the SSID in the second encoding format, where the second encoding format is an encoding format used by an operating system of the terminal, and the first encoding format is an encoding format different from the second encoding format. The terminal converts the obtained SSID in the first encoding format to the SSID in the second encoding format that can be correctly processed by the terminal, so that the terminal can correctly decode the SSID in the second encoding format by using the second encoding format, to further ensure that there is no garbled character when the SSID in the second encoding format is displayed.

## Description

This application claims priority to Chinese Patent Application No. 201710147083.0, filed with the Chinese Patent Office on March 13, 2017 and entitled "HOTSPOT CHINESE CHARACTER PROCESSING METHOD AND DEVICE", which is incorporated herein by reference in its entirety.

### TECHNICAL FIELD

The present invention relates to the field of communications technologies, and in particular, to a service set identifier processing method and apparatus, and a terminal.

### BACKGROUND

With rapid development of network technologies, application of a wireless access point (access point, AP) is increasingly popular. A wireless AP is an access point providing a service that enables access to the Internet (internet) through a wireless local area network (wireless local area network, WLAN). Any network device having a function of providing the service that enables access to the Internet through the WLAN can be considered as a wireless AP.

In a related technology, a user can identify different wireless APs by setting service set identifiers (service set identifier, SSID). In an SSID technology, one WLAN can be divided into a plurality of sub-networks that require respective identity authentication. Each sub-network requires independent identity authentication, and only a terminal succeeding in the identity authentication can access the corresponding sub-network. This implements virtual network isolation and prevents an unauthorized terminal from accessing a network. After a wireless AP in a WLAN broadcasts an SSID, a terminal having a function of accessing the wireless AP (for example, a mobile phone or a notebook computer having a function of accessing the wireless AP) may obtain, through scanning, the SSID broadcast by the wireless AP, and display, in a user interface of the terminal, the SSID obtained through specific processing. A user can access, by using the SSID displayed in the user interface of the terminal, the wireless AP corresponding to the SSID.

With popularity of wireless APs in various countries, an SSID can also be configured in different languages correspondingly. Currently, in addition to an SSID configured in English, an SSID configured in another language can also be used. In this case, when a terminal displays an SSID encoded in different languages, the SSID is often displayed as garbled characters.

### SUMMARY

This application provides a service set identifier processing method and apparatus, and a terminal, so as to resolve a prior-art problem that there are garbled characters when the terminal displays an SSID.

According to a first aspect, a service set identifier processing method is provided. In this method, a terminal obtains an SSID in a first encoding format, where the SSID in the first encoding format is broadcast by a wireless AP; and converts the obtained SSID in the first encoding format to an SSID in a second encoding format, and displays the SSID in the second encoding format, where the second encoding format is an encoding format used by an operating system of the terminal, and the first encoding format is an encoding format different from the second encoding format.

In an embodiment of this application, the terminal converts the obtained SSID in the first encoding format to the SSID in the second encoding format that can be correctly displayed by the terminal, so that the terminal can correctly decode the SSID in the second encoding format by using the second encoding format. Therefore, there is no garbled character when the SSID in the second encoding format is displayed.

In a possible design, the terminal converts the SSID in the first encoding format to the SSID in the second encoding format when displaying the SSID in the first encoding format. The terminal converts the SSID in the first encoding format to the SSID in the second encoding format when displaying the SSID in the first encoding format, so that the terminal processes only the SSID in the first encoding format below a display layer, and the terminal can normally display the SSID in the second encoding format without affecting processing of the SSID in the first encoding format at other logical layers of the terminal.

In another possible design, the terminal converts the SSID in the first encoding format to the SSID in the second encoding format when obtaining the SSID in the first encoding format. If the terminal converts the SSID in the first encoding format to the SSID in the second encoding format when obtaining the SSID in the first encoding format, the terminal can process only the SSID in the second encoding format at a layer above a driver layer, that is, only an SSID in one encoding format is processed at a layer above the driver layer of the terminal. This makes logic at a layer above the driver layer of the terminal simple.

In still another possible design, after obtaining the SSID in the first encoding format broadcast by the wireless AP, the terminal correspondingly stores the SSID in the first encoding format and an identifier of the wireless AP into storage space; and when determining to establish a network connection to the wireless AP, the terminal obtains, from the storage space, the SSID in the first encoding format corresponding to the identifier of the wireless AP, and establishes the network connection to the wireless AP based on the obtained SSID in the first encoding format.

In this embodiment of this application, the terminal correspondingly stores the SSID in the first encoding format broadcast by the wireless AP and the identifier of the wireless AP into the storage space of the terminal, so that when determining to establish the network connection to the wireless AP, the terminal can obtain the original SSID in the first encoding format from the storage space of the terminal. The SSID in the first encoding format obtained from the storage space is consistent with the SSID in the first encoding format broadcast by the wireless AP, so that the terminal can establish the network connection to the wireless AP based on the obtained SSID in the first encoding format.

In still another possible design, the second encoding format may be a Chinese character coded character set format or a variable-length character encoding format.

According to a second aspect, this application provides a service set identifier processing apparatus. The service set identifier processing apparatus has functions of the terminal in the method in the first aspect. The functions may be implemented by using hardware, or may be implemented by executing corresponding software by using hardware. The hardware or the software includes one or more modules corresponding to the foregoing functions. The modules may be software and/or hardware.

According to a third aspect, this application provides a terminal. The terminal may include a transceiver, a processor, a memory, and a display. The transceiver, the processor, the memory, and the display may be connected by using a bus system. The memory is configured to store a program, and the processor is configured to execute the program in the memory, to perform the service set identifier method in the first aspect or any possible design in the first aspect.

According to a fourth aspect, this application further provides a computer readable storage medium, where the computer readable storage medium stores some instructions. When these instructions are invoked and executed by a computer, the computer is enabled to perform the method in the first aspect or any possible design in the first aspect.

According to a fifth aspect, this application provides a computer program product, where when being invoked and executed by a computer, the computer program product can perform the method in the first aspect or any possible design in the first aspect.

In the embodiments of this application, the terminal obtains the SSID in the first encoding format broadcast by the wireless AP, and converts the SSID in the first encoding format to the SSID in the second encoding format used by the operating system of the terminal, so that the terminal can correctly decode the SSID in the second encoding format by using the second encoding format, and display the SSID in the second encoding format. Therefore, there is no garbled character when the SSID in the second encoding format is displayed.

### BRIEF DESCRIPTION OF DRAWINGS

FIG. 1 is a schematic diagram of a logical architecture of a terminal according to this application;
FIG. 2 is a flowchart of a service set identifier processing method according to this application;
FIG. 3 is a schematic comparison diagram of processing a service set identifier according to this application;
FIG. 4 is another schematic comparison diagram of processing a service set identifier according to this application;
FIG. 5A is an effect diagram of SSIDs displayed on a terminal in the prior art;
FIG. 5B is an effect diagram of SSIDs displayed on a terminal according to this application;
FIG. 6 is another flowchart of a service set identifier processing method according to this application;
FIG. 7 is a schematic diagram of a service set identifier apparatus according to this application; and
FIG. 8 is a schematic diagram of a terminal according to this application.

### DESCRIPTION OF EMBODIMENTS

To make the objectives, technical solutions, and advantages of this application clearer, the following further describes this application in detail with reference to the accompanying drawings.

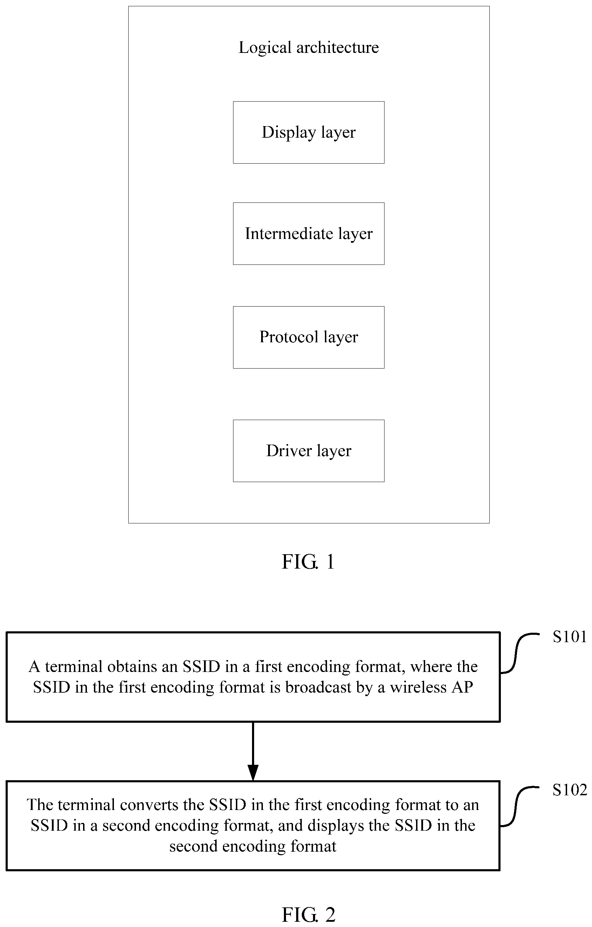

An SSID processing method provided in this application may be applied to a terminal that has a logical architecture shown in FIG. 1. As shown in FIG. 1, the logical architecture of the terminal is divided into a driver layer, a protocol layer, an intermediate layer, and a display layer. The driver layer may be used to receive/send wireless data, for example, in coverage of a WLAN, obtain an SSID broadcast by a wireless AP. The protocol layer may be used to determine whether to connect to a certain wireless AP, and when determining to connect to the wireless AP, establish a connection to the wireless AP by using an obtained SSID. The display layer may be used to display the SSID, and interact with a user through an interface. The intermediate layer is used to process other content between the display layer and the protocol layer.

Currently, an encoding format supported by a terminal and an encoding format supported by a wireless AP are inconsistent in many countries. Therefore, if the encoding format supported by the terminal is inconsistent with an SSID encoding format supported by the wireless AP, the terminal cannot normally display the SSID, and the SSID is displayed as garbled characters. For example, the terminal generally supports a default encoding format of an operating system of the terminal (for example, a GBK encoding format supporting a Chinese encoding format). After receiving an SSID that is in an encoding format (for example, a UTF-8 encoding format) different from the default encoding format of the operating system and that is broadcast by the wireless AP, the terminal processes the received SSID by using the default encoding format. Consequently, the received Chinese SSID is displayed as garbled characters.

In view of this, the embodiments of this application provide an SSID processing method, so as to resolve a problem that there are garbled characters when the terminal displays the SSID.

It can be understood that the logical architecture of the terminal shown in FIG. 1 is merely an example for description. The logical architecture of the terminal in the embodiments of this application may also be another structure, and this is not limited in the embodiments of this application.

Further, it can be understood that the terminal that has the foregoing logical architecture in the embodiments of this application is a device providing voice and/or data connectivity to a user, and may include various handheld devices, in-vehicle devices, wearable devices, or computing devices that have a wireless communication function, or other processing devices connected to a wireless modem, and various forms of user equipments (user equipment, UE), mobile stations (mobile station, MS), terminal equipments (terminal equipment), transmission points (transmission and receiver point, TRP or transmission point, TP), and the like.

FIG. 2 is a flowchart of an SSID processing method according to an embodiment of this application. Referring to FIG. 2, the following steps are included.

S101: A terminal obtains an SSID in a first encoding format, where the SSID in the first encoding format is broadcast by a wireless AP.

In this embodiment of this application, there may be a plurality of wireless APs in a WLAN in which the terminal is located, and each wireless AP is corresponding to an SSID used to identify the wireless AP. When establishing a network connection, the terminal obtains SSIDs broadcast by various wireless APs in coverage of the WLAN, and displays the obtained SSIDs in a user interface of the terminal in a form of a network list, so that a user can select one SSID from the network list displayed in the user interface of the terminal, to establish the network connection to a wireless AP corresponding to the SSID.

Generally, an SSID identifying a wireless AP is encoded by using a fixed encoding format. When the encoding format is inconsistent with an encoding format supported by an operating system of the terminal, the SSID may be displayed as garbled characters. In the following, this embodiment of this application provides description mainly based on a case in which there are garbled characters when the terminal displays the SSID on a display interface.

For ease of description, the encoding format used by the SSID identifying the wireless AP is referred to as a first encoding format, and the encoding format supported by the operating system of the terminal is referred to as a second encoding format. The first encoding format is different from the second encoding format.

It should be noted that in the specification, claims, and accompanying drawings of the embodiments of this application, the terms "first", "second", and so on are intended to distinguish between similar objects but do not necessarily indicate a specific order or sequence. For example, the SSID in the first encoding format and the SSID in the second encoding format in this embodiment of the present invention are only for ease of description and distinguishing between the SSIDs in different encoding formats, and do not constitute a limitation on the encoding formats. It should be understood that the data termed in such a way are interchangeable in proper circumstances, so that this embodiment of the present invention described herein can be implemented in other orders than the order illustrated or described herein.

Further, it should be noted that the SSID in the first encoding format in this embodiment of this application is an SSID supporting the first encoding format.

S102: The terminal converts the SSID in the first encoding format to an SSID in a second encoding format, and displays the SSID in the second encoding format.

In this embodiment of this application, the SSID in the second encoding format may be understood as an SSID that can be normally displayed on a display interface of the terminal. Generally, an encoding format supported by the SSID that is normally displayed on the display interface of the terminal is an encoding format supported by an operating system of the terminal. Therefore, the second encoding format in this embodiment of this application may be understood as the encoding format supported by the operating system of the terminal. For example, if the encoding format used by the operating system of the terminal is GBK, an SSID using the GBK encoding format may be understood as the SSID in the second encoding format.

In this embodiment of this application, the terminal converts the obtained SSID in the first encoding format to the SSID in the second encoding format, and the SSID in the second encoding format is the encoding format supported by the operating system of the terminal. Therefore, when displaying the SSID in the second encoding format, the terminal can correctly decode the SSID in the second encoding format by using the second encoding format, so that there is no garbled character when the SSID in the second encoding format is displayed.

Further, in this embodiment of this application, the second encoding format can be determined based on the encoding format supported by the operating system of the terminal, and the encoding format may be a Chinese character coded character set format or a variable-length character encoding format. The Chinese character coded character set format may include GBK, GB2312, GB18030, and the like. The variable-length character encoding format may include UTF-8, UTF-16, and the like.

In this embodiment of this application, the terminal may convert the SSID in the first encoding format to the SSID in the second encoding format in the following manners.

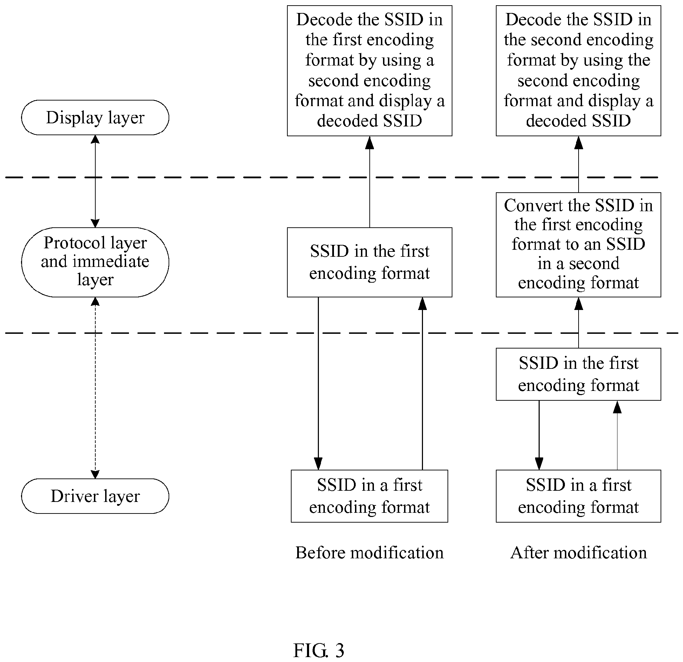

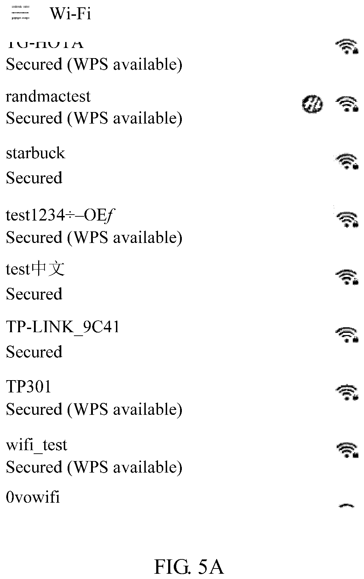

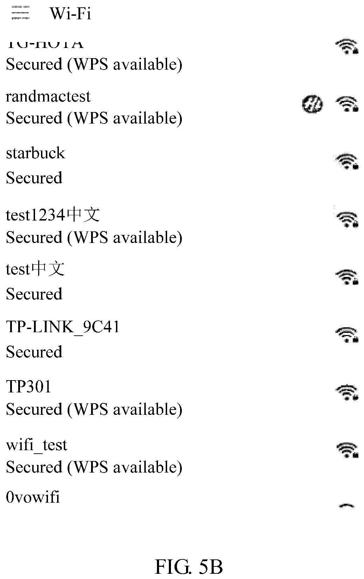

In a possible implementation, the terminal converts the SSID in the first encoding format to the SSID in the second encoding format when displaying the SSID in the first encoding format. FIG. 3 is a schematic comparison diagram of processing an SSID according to an embodiment of this application. Referring to FIG. 3, "Before modification" represents a process of processing the SSID before the SSID processing method provided in this application is used, and "After modification" represents a process of processing the SSID by using the SSID processing method provided in this application. In FIG. 3, a dashed line is used to split a logical architecture of the terminal. In the processing process before modification, the terminal processes the obtained SSID in the first encoding format by using a default encoding format (the second encoding format) of the operating system. Because the second encoding format used by the terminal by default is inconsistent with the first encoding format, garbled characters are displayed when the terminal decodes the SSID in the first encoding format by using the second encoding format and displays the SSID in the first encoding format, as shown in FIG. 5A. In the processing process after modification, at the driver layer, the terminal still uses the obtained the first encoding format to process the SSID. However, when displaying the SSID in the user interface, the terminal converts the SSID in the first encoding format to the SSID in the second encoding format, and processes the converted-to SSID in the second encoding format. Because the terminal supports the second encoding format, the terminal can correctly decode the SSID in the second encoding format by using the second encoding format, so that there is no garbled character when the SSID in the second encoding format is displayed, as shown in FIG. 5B.

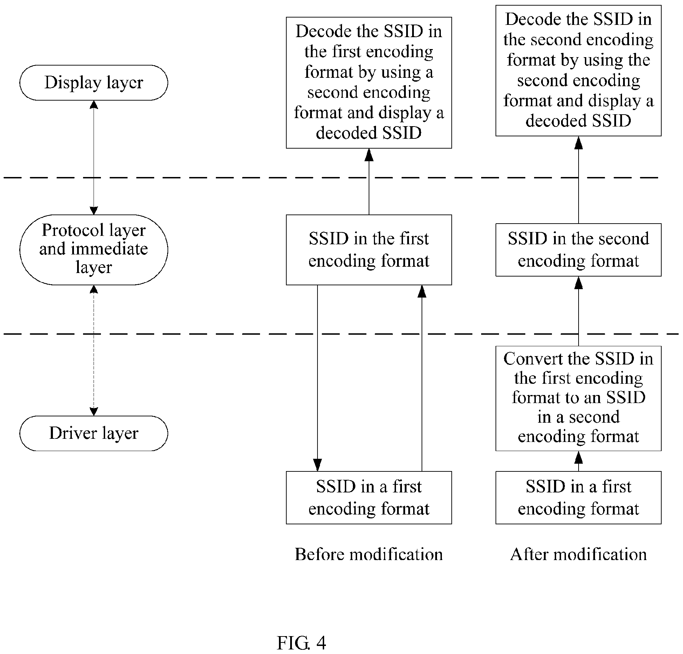

In another possible implementation, the terminal converts the SSID in the first encoding format to the SSID in the second encoding format when obtaining the SSID in the first encoding format. FIG. 4 is another schematic comparison diagram of processing an SSID according to an embodiment of this application. Referring to FIG. 4, meanings of "Before modification" and "After modification" in FIG. 4 are same as those in FIG. 3. As shown in FIG. 4, in the processing process before modification, the terminal processes the obtained SSID in the first encoding format by using a default encoding format (the second encoding format) of the operating system. Because the second encoding format used by the terminal by default is inconsistent with the first encoding format, garbled characters are displayed when the terminal decodes the SSID in the first encoding format by using the second encoding format and displays the SSID in the first encoding format, as shown in FIG. 5A. In the processing process after modification, when obtaining the SSID in the first encoding format, the terminal converts the SSID in the first encoding format to the SSID in the second encoding format, and processes the converted-to SSID in the second encoding format. Because the terminal supports the second encoding format, the terminal can correctly decode the SSID in the second encoding format by using the second encoding format, so that there is no garbled character when the SSID in the second encoding format is displayed, as shown in FIG. 5B.

Because the terminal obtains the SSID in the first encoding format at the driver layer, the terminal converts the SSID in the first encoding format to the SSID in the second encoding format when obtaining the SSID in the first encoding format, that is, the terminal converts the SSID in the first encoding format to the SSID in the second encoding format at the driver layer. The terminal converts the SSID in the first encoding format to the SSID in the second encoding format at the driver layer, so that the terminal processes only the SSID in the second encoding format at all logical layers above the driver layer, that is, only an SSID in one encoding format is processed at the logical layers above the driver layer of the terminal. This makes logic at the logical layers above the driver layer of the terminal easy to implement.

It should be noted that in this embodiment of this application, the terminal is not limited to convert the SSID in the first encoding format to the SSID in the second encoding format when displaying the SSID in the first encoding format or when obtaining the SSID in the first encoding format. For example, the terminal may alternatively convert the SSID in the first encoding format to the SSID in the second encoding format in other processing processes between a processing process of displaying the SSID in the first encoding format and a processing process of obtaining the SSID in the first encoding format.

Further, it should be noted that, for a specific implementation process of converting the SSID in the first encoding format to the SSID in the second encoding format by the terminal in this embodiment of this application, an existing transcoding technology may be used to perform the conversion. Details are not described herein again.

In this embodiment of this application, that the terminal normally displays the SSID cannot ensure a normal network connection between the terminal and a wireless AP corresponding to the normally-displayed SSID. To ensure that the terminal establishes a normal network connection to the SSID, an embodiment of this application provides another SSID processing method.

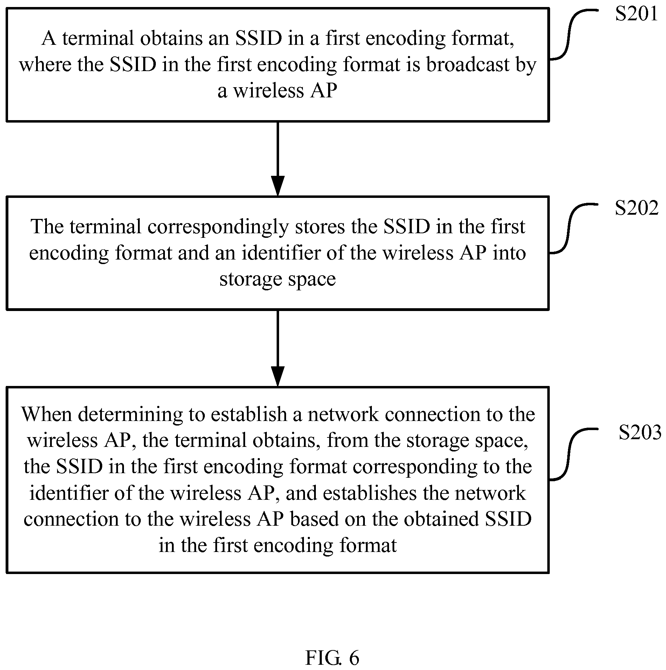

FIG. 6 is another flowchart of an SSID processing method according to an embodiment of this application. Referring to FIG. 6, the following steps are included.

S201: A terminal obtains an SSID in a first encoding format, where the SSID in the first encoding format is broadcast by a wireless AP.

In this embodiment of this application, meanings of a first encoding format and the SSID in the first encoding format are same as those in the foregoing embodiment, and details are not described herein again.

In this embodiment of this application, it is assumed that a plurality of wireless APs broadcast SSIDs in a WLAN, and the SSIDs broadcast by the plurality of wireless APs include: "randmactest", "starbuck", "test1234 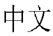 ", "test 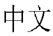 ", "TP_LINK_9C41", "TP301", "wifi test", and "0vowifi". Further, it is assumed that "randmactest", "starbuck", "TP_LINK 9C41", "TP301", "wifi_test", "0vowifi", and "test 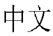 " all are SSIDs in a variable-length character encoding format, and "test1234 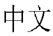 " is an SSID in a GBK encoding format.

If an operating system of the terminal is an Android system, a supported second encoding format is the variable-length character encoding format, and the SSID in the first encoding format obtained by the terminal is "test1234 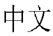 ", there may be garbled characters when the terminal displays "test1234 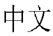 " on a display interface. As shown in FIG. 5A, the SSID "test1234 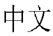 " is displayed as garbled characters. To avoid a problem that there are garbled characters when the terminal displays "test1234 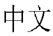 " on the display interface, the SSID processing method shown in FIG. 2 and the SSID processing methods after modification in FIG. 3 and FIG. 4 in the embodiments of this application can be used.

S202: The terminal correspondingly stores the SSID in the first encoding format and an identifier of the wireless AP into storage space.

In this embodiment of this application, after obtaining the SSID in the first encoding format, the terminal correspondingly stores the SSID in the first encoding format and the identifier of the wireless AP into the storage space. In the foregoing example, the SSID in the first encoding format obtained by the terminal is "test1234 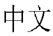 ", and the terminal correspondingly stores the obtained SSID "test1234 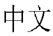 " and the identifier of the wireless AP into the storage space, for example, into a file directory /data/misc/wifi/wpa_supplicant.conf.

In this embodiment of this application, the identifier of the wireless AP is a parameter, different from the SSID, in parameters used to identify the wireless AP. For example, the identifier of the wireless AP may be an address of the wireless AP.

S203: When determining to establish a network connection to the wireless AP, the terminal obtains, from the storage space, the SSID in the first encoding format corresponding to the identifier of the wireless AP, and establishes the network connection to the wireless AP based on the obtained SSID in the first encoding format.

In this embodiment of this application, it is assumed that the terminal determines to establish a network connection to the wireless AP corresponding to "test1234 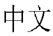 ", the terminal obtains the stored SSID in the first encoding format, "test1234 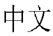 ", from the storage space, and establishes the network connection to the wireless AP based on the obtained SSID in the first encoding format, "test1234 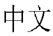 ".

In this embodiment of this application, the terminal correspondingly stores the SSID in the first encoding format broadcast by the wireless AP and the identifier of the wireless AP into the storage space of the terminal, so that when establishing the network connection to the wireless AP, the terminal can obtain the SSID in the first encoding format from the storage space. The SSID in the first encoding format obtained from the storage space can match the SSID in the first encoding format broadcast by the wireless AP, so that the terminal can establish the network connection to the wireless AP based on the obtained SSID in the first encoding format.

In actual application, when the terminal establishes the network connection to the wireless AP, in addition to the SSID, matching with other information of the wireless AP corresponding to the SSID may be further performed. For example, matching with an encryption manner of the wireless AP or an address of the wireless AP may be further performed. In this embodiment of this application, only the SSID is modified, and therefore only matching the SSID broadcast by the wireless AP and the SSID stored in the terminal is described in this embodiment of this application.

A process for processing the SSID is mainly described in the foregoing embodiments of this application. It can be understood that, to implement the foregoing functions, the terminal includes corresponding hardware structures and/or software units for performing the functions. Units and algorithm steps of the examples described with reference to the embodiments disclosed in this application may be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, functional unit (device or component) division may be performed on the network device based on the foregoing method embodiments. For example, functional units (devices or components) may be obtained through division based on functions, or two or more than two functions may be integrated into one processing unit (device or component). The integrated unit (device or component) may be implemented in a form of hardware, or may be implemented in a form of a software functional unit. It should be noted that the unit (device or component) division in the embodiments of this application is an example, and is merely logical function division, and may be other division in actual implementation.

Based on the same concept as the foregoing method embodiments, an embodiment of this application further provides an SSID processing apparatus.

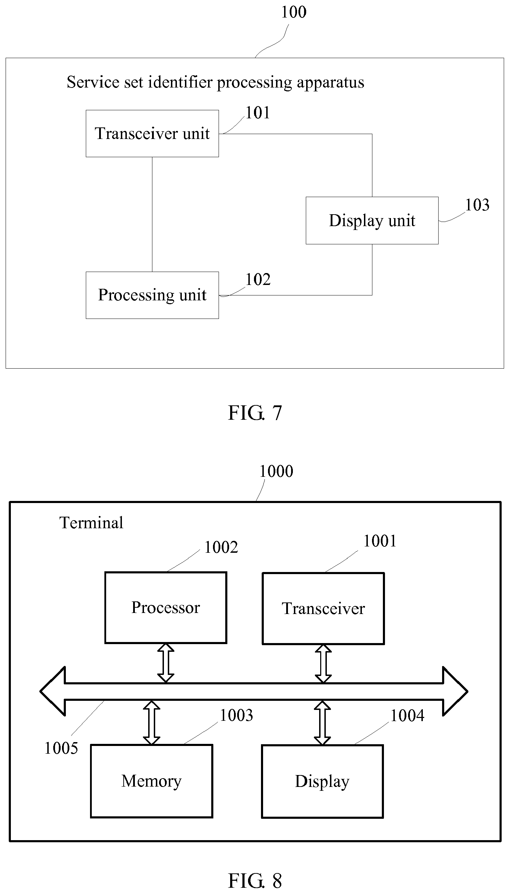

When an integrated unit is used, FIG. 7 is a schematic diagram of a possible logical structure of an SSID processing apparatus. The SSID processing apparatus may be applied to a terminal. Referring to FIG. 7, the SSID processing apparatus 100 includes a transceiver unit 101, a processing unit 102, and a display unit 103. The transceiver unit 101 is configured to obtain an SSID in a first encoding format, where the SSID in the first encoding format is broadcast by a wireless AP. The processing unit 102 is configured to convert the SSID in the first encoding format obtained by the transceiver unit 101 to an SSID in a second encoding format. The display unit 103 is configured to display the SSID in the second encoding format.

The second encoding format is an encoding format used by an operating system of the terminal, and the first encoding format is an encoding format different from the second encoding format.

The second encoding format may be a Chinese character coded character set format or a variable-length character encoding format.

In a possible design, the processing unit 102 is specifically configured to:
convert the SSID in the first encoding format to the SSID in the second encoding format when the display unit 103 displays the SSID in the first encoding format.

In another possible design, the processing unit 102 is specifically configured to:
convert the SSID in the first encoding format to the SSID in the second encoding format when the transceiver unit 101 obtains the SSID in the first encoding format.

In still another possible design, the processing unit 102 is further configured to:
after the transceiver unit 101 obtains the SSID in the first encoding format broadcast by the wireless AP, correspondingly store the SSID in the first encoding format and an identifier of the wireless AP into preset storage space; and when determining to establish a network connection to the wireless AP, obtain, from the storage space, the SSID in the first encoding format corresponding to the identifier of the wireless AP, and control the transceiver unit 101 to establish the network connection to the wireless AP based on the obtained SSID in the first encoding format.

In this embodiment of this application, the module division is an example, and is merely logical function division and may be another division manner in actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

When the integrated module is implemented in a form of hardware, FIG. 8 is a schematic diagram of a terminal 1000 according to an embodiment of this application. The terminal 1000 may be configured to perform the methods performed by the terminal in FIG. 2 to FIG. 5. As shown in FIG. 8, the terminal 1000 includes a transceiver 1001, a processor 1002, a memory 1003, and a display 1004. The transceiver 1001, the processor 1002, the memory 1003, and the display 1004 may be connected by using a bus system 1005.

The memory 1003 is configured to store a program, an instruction, or code. The processor 1002 is configured to execute the program stored in the memory 1003, to control the transceiver 1001 to obtain an SSID in a first encoding format, where the SSID in the first encoding format is broadcast by a wireless AP, and to implement various steps and functions implemented by the terminal in the foregoing implementations. Details are not described herein again. For specific implementations of the transceiver 1001 and the processor 1002, refer to the specific descriptions of the transceiver unit 101 and the processing unit 102 in the implementation in FIG. 7. Details are not described herein again.

It can be understood that FIG. 8 shows only a simplified design of the terminal. In actual application, the terminal is not limited to the foregoing structure, and may include any quantity of interfaces, processors, memories, and the like in the actual application. All terminals that can implement the embodiments of this application fall within the protection scope of the embodiments of this application.

Further, it can be understood that the SSID processing apparatus 100 and the terminal 1000 in the embodiments of this application may be configured to implement corresponding functions of the terminal in the foregoing method embodiments in the embodiments of this application. Therefore, for content that is described in detail in the embodiments of this application, refer to the description in the related method embodiments. Details are not described in the embodiments of this application.

Further, it should be understood that in this embodiment of this application, the processor may be a central processing unit (central processing unit, "CPU" for short), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The memory may include a read-only memory and a random access memory, and provide an instruction and data to the processor. A part of the memory may further include a non-volatile random access memory. For example, the memory may further store device type information.

The bus system may further include a power bus, a control bus, a status signal bus, and the like, in addition to a data bus. However, for clear description, various types of buses in the figure are marked as the bus system.

In an implementation process, steps in the foregoing method embodiments can be implemented by using a hardware integrated logical circuit in the processor, or by using instructions in a form of software. The steps of the SSID processing method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory, and the processor reads information in the memory and completes the steps in the foregoing methods in combination with hardware of the processor. To avoid repetition, details are not described herein again.

Based on the same concept as the foregoing method embodiments, an embodiment of this application further provides a computer readable storage medium. The computer readable storage medium stores some instructions. When these instructions are invoked and executed by a computer, the computer is enabled to perform the method in the foregoing method embodiments and any possible design in the foregoing method embodiments.

Based on a same concept as the foregoing method embodiments, this application further provides a computer program product. When being invoked and executed by a computer, the computer program product can perform the method in the foregoing method embodiments and any possible design in the foregoing method embodiments.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A service set identifier processing method, wherein the method comprises:
obtaining, by a terminal, a service set identifier SSID in a first encoding format, wherein the service set identifier SSID in the first encoding format is broadcast by a wireless access point AP; and
converting, by the terminal, the SSID in the first encoding format to an SSID in a second encoding format, and displaying the SSID in the second encoding format, wherein the second encoding format is an encoding format used by an operating system of the terminal, and the first encoding format is an encoding format different from the second encoding format;.

2. The method according to claim 1, wherein the converting, by the terminal, the SSID in the first encoding format to an SSID in a second encoding format comprises:
converting, by the terminal, the SSID in the first encoding format to the SSID in the second encoding format when displaying the SSID in the first encoding format.

3. The method according to claim 1, wherein the converting, by the terminal, the SSID in the first encoding format to an SSID in a second encoding format comprises:
converting, by the terminal, the SSID in the first encoding format to the SSID in the second encoding format when obtaining the SSID in the first encoding format.

4. The method according to any one of claims 1 to 3, wherein after the obtaining, by a terminal, an SSID in a first encoding format, wherein the SSID in the first encoding format is broadcast by a wireless AP, the method further comprises:
correspondingly storing, by the terminal, the SSID in the first encoding format and an identifier of the wireless AP into storage space; and
when determining to establish a network connection to the wireless AP, obtaining, by the terminal from the storage space, the SSID in the first encoding format corresponding to the identifier of the wireless AP, and establishing the network connection to the wireless AP based on the obtained SSID in the first encoding format.

5. The method according to any one of claims 1 to 4, wherein the second encoding format is a Chinese character coded character set format or a variable-length character encoding format.

6. A service set identifier processing apparatus, wherein the apparatus comprises:
a transceiver unit, configured to obtain a service set identifier SSID in a first encoding format, wherein the service set identifier SSID in the first encoding format is broadcast by a wireless access point AP;
a processing unit, configured to convert the SSID in the first encoding format obtained by the transceiver unit to an SSID in a second encoding format; and
a display unit, configured to display the SSID in the second encoding format, wherein
the second encoding format is an encoding format used by an operating system of the terminal, and the first encoding format is an encoding format different from the second encoding format.

7. The apparatus according to claim 6, wherein the processing unit is specifically configured to:
convert the SSID in the first encoding format to the SSID in the second encoding format when the display unit displays the SSID in the first encoding format.

8. The apparatus according to claim 6, wherein the processing unit is specifically configured to:
convert the SSID in the first encoding format to the SSID in the second encoding format when the transceiver unit obtains the SSID in the first encoding format.

9. The apparatus according to any one of claims 6 to 8, wherein the processing unit is further configured to:
after the transceiver unit obtains the SSID in the first encoding format broadcast by the wireless AP, correspondingly store the SSID in the first encoding format and an identifier of the wireless AP into preset storage space; and
when determining to establish a network connection to the wireless AP, obtain, from the storage space, the SSID in the first encoding format corresponding to the identifier of the wireless AP, and control the transceiver unit to establish the network connection to the wireless AP based on the obtained SSID in the first encoding format.

10. The apparatus according to any one of claims 6 to 9, wherein the second encoding format is a Chinese character coded character set format or a variable-length character encoding format.

11. A terminal, comprising the service set identifier processing apparatus according to any one of claims 6 to 10.

12. A computer readable storage medium, wherein the computer readable storage medium stores a computer instruction, wherein when the instruction runs on a computer, the computer is enabled to perform the method according to any one of claims 1 to 5.

13. A computer program product, wherein when the computer program product is invoked by a computer, the computer is enabled to perform the method according to any one of claims 1 to 5.
